# DEMANDE DE BREVET EUROPEEN

(11) **EP 2 891 837 A1**
(43) Date de publication de la demande: **08.07.2015**
(21) Numéro de dépôt: 15150213.5
(22) Date de dépôt: 06.01.2015
(51) Int. Cl.: F16L 19/02, F16L 25/02

(54) **Procédé de fabrication de raccord tournant diélectrique et bimétallique et raccord tournant diélectrique et bimétallique correspondant**

(30) Priorité: 07.01.2014 FR 1450068
(71) Demandeur: Atlantic Industrie, 85000 La Roche sur Yon (FR)
(72) Inventeur: Obrist, Stéphane, 68480 Linsdorf (FR)
(74) Mandataire: Kaspar, Jean-Georges

(57) **Abrégé**

Dans un procédé de fabrication de raccord tournant diélectrique et bimétallique, on réalise les étapes suivantes :
a) on met en place le moyen diélectrique (3) sur une pièce (2) de raccord ;
b) on met en place l'autre pièce (1) de raccord, de manière que le moyen diélectrique (3) soit placé entre les deux pièces de raccord ;
c) on déforme partiellement une pièce (1) de raccord, pour relier avec jeu les deux pièces (1, 2) de raccord avec interposition du moyen (3) diélectrique, pour constituer un raccord tournant diélectrique et bimétallique.

## Description

L'invention est relative à un procédé de fabrication de raccord tournant diélectrique et bimétallique comportant une première pièce de raccord en un premier matériau métallique et une deuxième pièce de raccord en un deuxième matériau métallique différent du premier matériau métallique.

L'invention est également relative à un raccord tournant diélectrique et bimétallique comportant une première pièce de raccord en un premier matériau métallique et une deuxième pièce de raccord en un deuxième matériau métallique différent du premier matériau métallique.

Les raccords tournants diélectriques et bimétalliques sont à distinguer des raccords sertis diélectriques et bimétalliques.

Dans ces raccords sertis diélectriques et bimétalliques, qui ne tournent pas, les fonctions étanchéité et isolation diélectrique ne sont pas dissociées.

Le document US 3 441 293 décrit un accouplement de tuyaux par sertissage, et ne décrit pas un raccord tournant.

Le document US 5 588 682 décrit un accouplement isolant pour conduite de gaz, et ne décrit pas un raccord tournant.

Les documents EP 0 937 936 A1 et FR 2 759 762 A1 décrivent des raccords isolants diélectriques sertis, et ne décrivent pas des raccords tournants.

Dans ces documents EP 0 937 936 A1 et FR 2 759 762 A1, le sertissage pince le moyen diélectrique et risque de détériorer ce moyen diélectrique ou de désaligner le montage des pièces de raccord.

Le document FR 2 759 762 décrit en particulier un raccord isolant diélectrique comportant une première pièce de raccord et une deuxième pièce de raccord avec interposition de moyens diélectriques annulaires interdisant tout contact direct entre les première et deuxième pièces de raccord. Ces moyens diélectriques annulaires constituent en même temps des moyens d'étanchéité entre les première et deuxième pièces de raccord. L'une des première et deuxième pièces de raccord comporte à l'une de ses extrémités un appendice axial tubulaire à diamètre externe réduit et à faible épaisseur de paroi. L'appendice s'étend à travers les moyens diélectriques et à travers une partie d'extension radiale de l'autre pièce de raccord servant de surface d'appui aux moyens diélectriques. Un tronçon d'extrémité de l'appendice est rabattu par sertissage sur les moyens diélectriques de manière à constituer lesdits moyens d'assemblage des première et deuxième pièces.

Le document FR 2 927 142 décrit un dispositif formant raccord isolant galvanique. Le dispositif comporte deux pièces en matériaux différant de par leur potentiel électrochimique et un organe intermédiaire interdisant tout contact direct entre les deux pièces. L'organe intermédiaire présente une conformation de douille encliquetable destinée à être montée prisonnière entre lesdites deux pièces. L'organe intermédiaire comporte des pattes encliquetables dans des logements d'une première pièce munie d'un joint d'étanchéité placé dans une gorge intérieure de cette première pièce.

Les raccords isolants de type connu assurent la liaison mécanique et l'étanchéité, tout en créant une barrière galvanique entre les matériaux métalliques qui présentent des potentiels électrostatiques différents.

En l'absence d'une telle barrière galvanique, des courants vagabonds se produisent et entraînent un risque de corrosion entre les surfaces de natures différentes en contact l'une avec l'autre.

On connaît des raccords isolants comportant trois pièces métalliques usinées et deux pièces en matière plastique disposées entre les pièces métalliques afin d'assurer une isolation diélectrique. Ce genre de raccord peut comporter une première pièce tubulaire en acier pourvue d'un taraudage et d'un filetage. La première pièce peut être reliée à une deuxième pièce tubulaire en laiton pourvue d'une collerette et d'un filetage. Les première et deuxième pièces sont assemblées par un écrou qui est pourvu d'une rondelle à l'une de ses extrémités. Cette rondelle venue de matière s'étend dans le sens radial vers l'axe de l'écrou. Pour effectuer l'assemblage des pièces, l'écrou est enfilé sur la deuxième pièce et vissé sur le filetage de la première pièce, avec interposition d'un anneau en matériau diélectrique. Cet anneau en matière diélectrique, par exemple en caoutchouc, est disposé entre les extrémités des première et deuxième pièces. On peut disposer un manchon à collerette en matériau diélectrique, par exemple en une matière plastique semi-rigide entre l'écrou et la deuxième pièce. Ce manchon peut être du genre décrit en référence aux figures 1 et 2 du document FR 2 759 762.

Un premier but de l'invention est de proposer un raccord tournant isolant, diélectrique et bimétallique, qui est composé d'un nombre réduit de pièces usinées.

Un deuxième but de l'invention est de proposer un nouveau raccord isolant diélectrique et bimétallique réalisé sous forme d'un ensemble indissociable, de manière à faciliter la mise en oeuvre et l'utilisation du nouveau raccord lors des opérations de plomberie, en particulier lors du raccordement d'un chauffe-eau électrique à une conduite d'eau domestique ou industrielle.

Un troisième but de l'invention est de proposer un nouveau procédé de fabrication du raccord tournant diélectrique et bimétallique avec un nombre réduit d'étapes de fabrication.

Un quatrième but de l'invention est de proposer un nouveau procédé de fabrication de raccord tournant diélectrique et bimétallique permettant de dissocier les fonctions d'étanchéité et d'isolation électrique.

L'invention a pour objet un procédé de fabrication de raccord tournant diélectrique et bimétallique, le raccord tournant comportant une première pièce de raccord en un premier matériau métallique et une deuxième pièce de raccord en un deuxième matériau différent du premier matériau métallique, pour relier les première et deuxième pièces de raccord avec interposition d'un moyen diélectrique, caractérisé par les étapes suivantes :
a) mise en place du moyen diélectrique sur une pièce de raccord ;
b) mise en place de l'autre pièce de raccord, de manière que le moyen diélectrique soit placé entre les deux pièces de raccord ;
c) déformation partielle d'une pièce de raccord pour relier avec jeu les deux pièces de raccord, avec interposition du moyen diélectrique, pour constituer un raccord tournant diélectrique et bimétallique.

Le procédé selon l'invention permet ainsi de constituer un raccord tournant diélectrique et bimétallique constitué de plusieurs pièces reliées de manière indissociable et intégrant la fonction d'isolation diélectrique entre les deux pièces métalliques.

Selon d'autres caractéristiques alternatives de l'invention :
- La première pièce de raccord peut être un écrou tournant.
- La deuxième pièce de raccord peut être un mamelon.
- Le moyen diélectrique peut comporter une bague annulaire en matériau électriquement isolant.
- Le moyen diélectrique peut comporter une bague fendue présentant une section en Γ.
- Le moyen diélectrique peut comporter une bague continue présentant une section en Γ.
- Le moyen diélectrique peut comporter un traitement ou un revêtement de surface électriquement isolant sur une pièce de raccord.

L'invention est également relative à un raccord tournant isolant diélectrique et bimétallique fabriqué par mise en oeuvre d'un procédé selon l'invention.

Selon d'autres caractéristiques alternatives de l'invention :
- Le moyen diélectrique est interposé avec un jeu entre la première pièce de raccord et la deuxième pièce de raccord, de manière à constituer un raccord tournant diélectrique et bimétallique sous forme d'un ensemble monté de manière indissociable.
- Une pièce de raccord présente avantageusement une portée destinée à un joint d'étanchéité.
- le moyen diélectrique est prisonnier de manière indissociable entre la première pièce de raccord et la deuxième pièce de raccord.

L'invention sera mieux comprise grâce à la description qui va suivre donnée à titre d'exemple non limitatif, en référence aux dessins annexés dans lesquels :
Les figures 1 à 3 représentent schématiquement des étapes de fabrication d'un procédé de fabrication de raccord tournant diélectrique et bimétallique selon l'invention.
La figure 4 représente schématiquement une vue en coupe diamétrale d'un raccord tournant diélectrique et bimétallique selon l'invention.
Les figures 5 à 9 représentent schématiquement des étapes de fabrication d'un autre procédé de fabrication de raccord tournant diélectrique et bimétallique selon l'invention.
La figure 10 représente schématiquement une vue en coupe diamétrale d'un raccord tournant diélectrique et bimétallique selon l'invention.

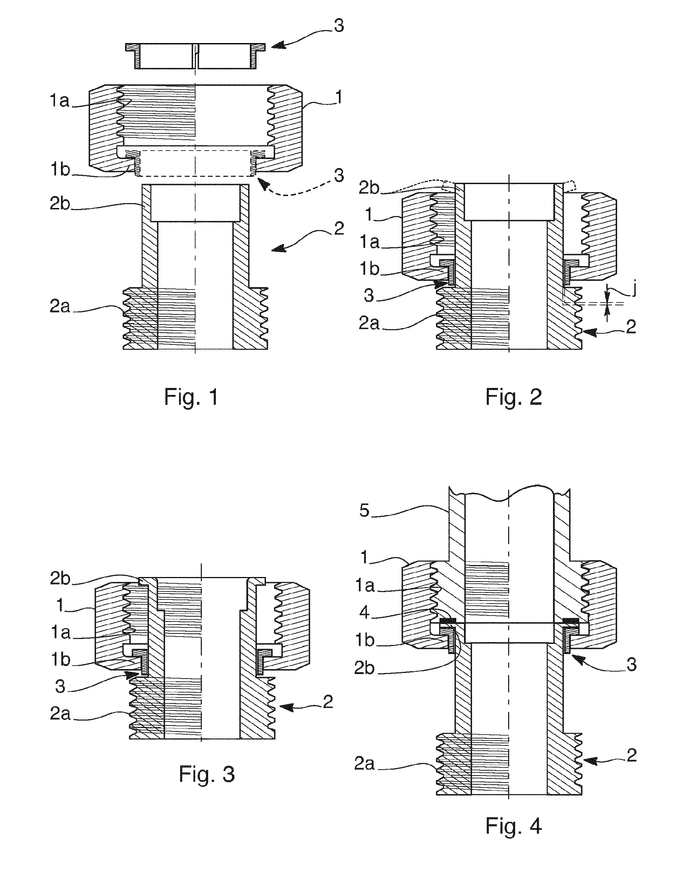

En référence aux figures 1 à 10, les éléments identiques ou fonctionnellement équivalents sont repérés par des chiffres de référence identiques.

Sur la figure 1, une première pièce (1) de raccord en acier est constituée comme écrou tournant comportant un taraudage intérieur (1a) et un anneau (1b) s'étendant radialement intérieurement vers l'axe du taraudage intérieur (1a).

L'écrou tournant (1) comporte par exemple un contour hexagonal, mais d'autres contours peuvent être envisagés sans sortir du cadre de la présente invention.

Une deuxième pièce (2) de raccord en laiton présente une extrémité inférieure renflée comportant un filetage (2a), une partie cylindrique médiane et une partie supérieure cylindrique amincie (2b).

Un moyen diélectrique (3) est constitué sous forme d'une bague continue présentant une section en Γ, avec une partie cylindrique et une collerette.

Le diamètre extérieur de la bague continue (3) est adapté pour permettre la mise en place de la bague continue (3) à l'intérieur du taraudage (1a), tandis que la partie cylindrique de la bague continue (3) présente un diamètre extérieur inférieur au diamètre intérieur de l'anneau (1b).

Dans une première étape, on met en place la bague (3) dans la position représentée en traits pointillés sur la figure 1 à l'intérieur de la première pièce (1) de raccord.

Après avoir mis en place la bague continue (3) à l'intérieur de l'écrou (1), on enfile l'ensemble ainsi constitué comme représenté à la figure 2, jusqu'à laisser dépasser la partie cylindrique amincie (2b) au-dessus du plan supérieur de l'écrou (1).

Le passage de l'écrou (1) et de la bague annulaire (3) autour du fût cylindrique de la deuxième pièce (2) en laiton s'effectue avec un jeu de manière à faciliter le coulissement et à permettre la descente de l'écrou (3) jusqu'à venir en contact avec l'épaulement supérieur du filetage (2a) de la deuxième pièce (2).

Le dépassement de la partie cylindrique amincie (2b) est suffisant pour permettre la déformation de cette partie cylindrique (2b), par exemple par repoussage.

Sur la figure 3, la partie cylindrique (2b) de la deuxième pièce (2) a été déformée pour constituer une portée pour un joint d'étanchéité non représenté.

La déformation radiale extérieure de la partie (2b) constitue également une butée empêchant le démontage de l'écrou (1) et de la bague isolante (3).

L'ensemble ainsi monté constitue un raccord tournant diélectrique et bimétallique indissociable.

Sur la figure 4, un raccord tournant diélectrique et bimétallique selon l'invention a été réalisé par mise en oeuvre du procédé de fabrication décrit en référence aux figures 1 à 3.

Le raccord tournant diélectrique et bimétallique selon l'invention est représenté dans sa position d'utilisation, avec interposition d'un joint d'étanchéité (4) pris entre une tubulure (5) et la portée de joint (2b) de la deuxième pièce (2) du raccord.

La tubulure (5) est par exemple une tubulure de sortie de chauffe-eau électrique, mais l'invention s'étend à tout autre type de tubulure, constitué en un premier matériau métallique différent du matériau métallique de la deuxième pièce (2) du raccord.

Ainsi, grâce à l'invention, la protection galvanique est assurée par le moyen (3) diélectrique, tandis que la fonction d'étanchéité est remplie par un autre joint (4) d'étanchéité, distinct et de forme appropriée.

L'invention permet ainsi de séparer la fonction d'isolation galvanique et la fonction d'étanchéité, contrairement aux autres raccords galvaniques de l'art antérieur.

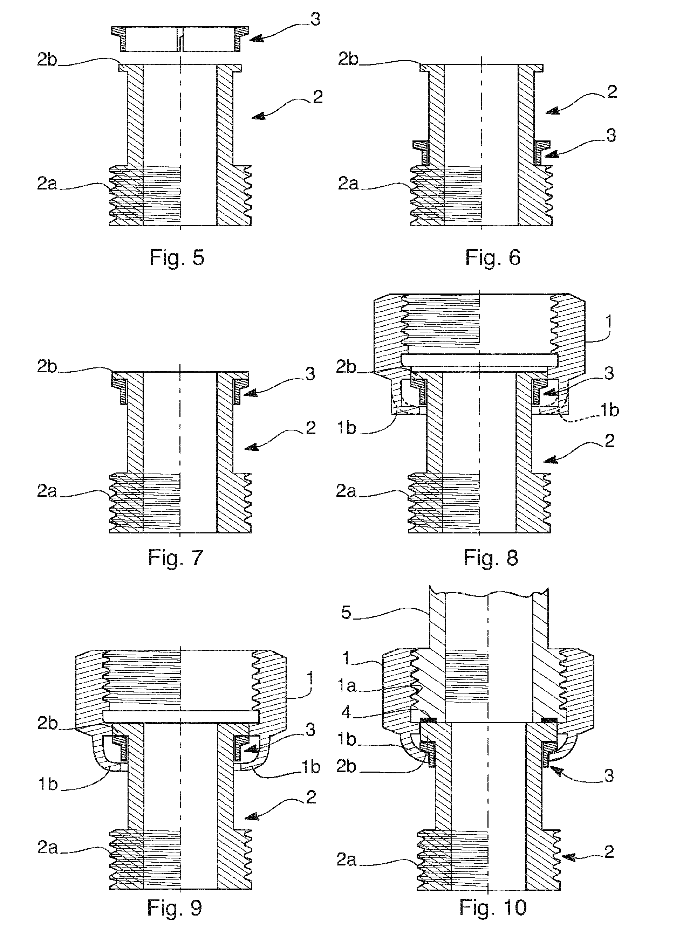

Sur la figure 5, une deuxième pièce (2) de raccord selon l'invention, par exemple en laiton, comporte une partie inférieure renflée constituant un filetage (2a) et une partie supérieure (2b) en forme de collerette, apte à servir de portée de joint d'étanchéité.

Un moyen diélectrique (3) est constitué sous forme d'une bague annulaire en matériau électriquement isolant, présentant une section en Γ.

Dans cet exemple, la bague (3) est une bague fendue, pouvant s'écarter radialement, de manière à passer autour de la collerette (2b).

Sur la figure 6, la bague fendue (3) est mise en place sur le fût cylindrique intermédiaire (2c) de la deuxième pièce (2) en laiton. Compte tenu du jeu diamétral, la bague annulaire fendue (3) tombe en butée sur l'épaulement supérieur du filetage (2a).

Sur la figure 7, la bague fendue (3) est maintenue provisoirement sous la collerette (2b), par exemple par gravité ou à l'aide d'une graisse collante ou d'un léger adhésif, pour être positionnée en prévision des étapes suivantes du procédé de fabrication selon l'invention.

Sur la figure 8, la première pièce (1) de matériau métallique, par exemple en acier, est présentée en regard de l'assemblage réalisé à la figure 7, de manière que sa partie cylindrique inférieure (1b) amincie se prolonge en dessous de la bague annulaire fendue positionnée sous la collerette (2b) de la deuxième pièce (2) en laiton.

Ce positionnement autorise la déformation de la partie cylindrique amincie (2b) radialement vers l'intérieur pour emprisonner la bague fendue (3) entre le dessous de la collerette (2b) et la partie déformée (1b) représentée en traits pointillés de la pièce (1) en acier.

Sur la figure 9, la déformation de la partie cylindrique amincie (1b) de la pièce (1) en acier a été effectuée, de manière que l'extrémité radiale intérieure de la partie (1b) de la pièce (1) présente une pente correspondant à l'angle intérieur de la conformation en Γ de la bague annulaire (3).

Cette disposition permet ainsi à la fois de centrer l'écrou tournant (1) et d'éviter tout contact métallique entre les deux matériaux différents des deux pièces métalliques (1 et 2).

Sur la figure 10, un raccord fabriqué à l'aide d'un procédé décrit en référence aux figures 5 à 9 est représenté en position d'utilisation avec interposition d'un joint d'étanchéité (4) entre la deuxième pièce (2) en laiton et la tubulure (5) représentée en traits pointillés.

La tubulure (5) est par exemple une tubulure de sortie de chauffe-eau électrique, mais l'invention s'étend également à tout autre type de tubulure.

Dans cet exemple également, la fonction d'étanchéité est assurée par le joint d'étanchéité (4) distinct du moyen diélectrique (3), de sorte que l'invention permet la séparation des fonctions d'étanchéité et d'isolation galvanique, contrairement au raccord galvanique de l'art antérieur.

L'invention décrite en référence à deux modes de réalisation particuliers ne leur est nullement limitée, mais couvre au contraire toute modification de forme et toute variante de réalisation dans le cadre des revendications annexées.

## Revendications

1. Procédé de fabrication de raccord tournant diélectrique et bimétallique comportant une première pièce (1) de raccord en un premier matériau métallique et une deuxième pièce (2) de raccord en un deuxième matériau métallique différent du premier matériau métallique, pour relier les première et deuxième pièces de raccord avec interposition d'un moyen (3) diélectrique, **caractérisé par** les étapes suivantes :
a) mise en place du moyen diélectrique (3) sur une pièce (1 ou 2) de raccord ;
b) mise en place de l'autre pièce (2 ou 1) de raccord, de manière que le moyen diélectrique (3) soit placé entre les deux pièces de raccord ;
c) déformation partielle d'une pièce (1 ou 2) de raccord, pour relier avec jeu les deux pièces (1, 2) de raccord avec interposition du moyen (3) diélectrique, pour constituer un raccord tournant diélectrique et bimétallique.

2. Procédé selon la revendication 1, **caractérisé par le fait que** la première pièce (1) de raccord est un écrou tournant.

3. Procédé selon la revendication 1, **caractérisé par le fait que** la deuxième pièce (2) de raccord est un mamelon.

4. Procédé selon la revendication 1, **caractérisé par le fait que** le moyen (3) diélectrique comporte une bague (3) annulaire en matériau électriquement isolant.

5. Procédé selon la revendication 1 ou la revendication 4, **caractérisé par le fait que** le moyen (3) diélectrique comporte une bague (3) fendue présentant une section en Γ.

6. Procédé selon la revendication 1 ou la revendication 4, **caractérisé par le fait que** le moyen (3) diélectrique comporte une bague (3) continue présentant une section en Γ.

7. Procédé selon la revendication 1, **caractérisé par le fait que** le moyen (3) diélectrique comporte un traitement ou un revêtement de surface électriquement isolant sur une pièce (1 ou 2) de raccord.

8. Raccord tournant isolant diélectrique et bimétallique fabriqué par mise en oeuvre d'un procédé selon l'une quelconque des revendications 1 à 7, comportant une première pièce (1) de raccord en un premier matériau métallique, une deuxième pièce (2) de raccord en un deuxième matériau métallique et un moyen (3) diélectrique, **caractérisé par le fait que** le moyen (3) diélectrique est interposé avec jeu entre ladite première pièce (1) de raccord et ladite deuxième pièce (2) de raccord, de manière à constituer un raccord tournant diélectrique et bimétallique sous forme d'un ensemble monté de manière indissociable.

9. Raccord tournant selon la revendication 8, **caractérisé par le fait qu'**une pièce (2) de raccord présente une portée (2b) destinée à un joint (4) d'étanchéité.

10. Raccord tournant selon la revendication 8 ou la revendication 9, **caractérisé par le fait que** le moyen diélectrique (3) est prisonnier de manière indissociable entre la première pièce (1) de raccord et la deuxième pièce (2) de raccord.
